# EUROPEAN PATENT APPLICATION

(11) **EP 3 666 139 A1**
(43) Date of publication of application: **17.06.2020**
(21) Application number: 19211757.0
(22) Date of filing: 27.11.2019
(51) Int. Cl.: A47J 37/07, F24C 15/18, A47J 37/06, F24C 3/06, F24C 3/08

(54) **ASSEMBLY COMPRISING A GAS OVEN AND AN OVEN FOR COOKING STEAKS**

(30) Priority: 13.12.2018 CN 201822098020 U; 06.08.2019 CN 201921260688 U
(71) Applicant: Shinerich Industrial Limited, Shenzhen City, Guangdong (CN)
(72) Inventor: JIN, Weidong, Shenzhen City, Guangdong (CN)
(74) Representative: Dall'Olio, Christian

(57) **Abstract**

A gas oven (2) with a steak oven (3) includes a stove frame (1) , wherein a gas oven (2) and a steak oven (3) are arranged on the stove frame (1), and the steak oven (3) located on one side of the gas oven (2). The gas oven with a steak oven is provided with both the steak oven and the gas oven, so that purchasing costs are reduced for users, and the users can use the steak oven and the gas oven at the same time extremely conveniently without walking back and forth; and the gas oven with a steak oven fills in a market gap and has a broad market prospect.

## Description

### Technical Field

The invention relates to the technical field of barbecue equipment, in particular to a gas oven with a steak oven.

### Description of Related Art

At present, steak ovens on the market are very popular with customers and are typically used for roasting steaks without an open flame, while gas ovens are typically used for roasting with an open flame. In the prior art, steak ovens and gas ovens are two different types of stoves and are generally separately purchased by users, which leads to a high purchasing cost; and in addition, the users have to walk back and forth between two positions to operate the two ovens independently when having a family party, which in turn, results in inconvenience.

### Brief Summary of the Invention

The technical issue to be settled by the invention is to provide a gas oven which is provided with a steak oven and is convenient to use.

The technical solution adopted by the invention to settle the above technical issue is as follows: a gas oven with a steak oven comprises a stove frame, wherein a gas oven and a steak oven are arranged on the stove frame, and the steak oven is located on one side of the gas oven.

Furthermore, a gas component is arranged on the stove frame and comprises a steak oven burner located in the steak oven and a gas oven burner located in the gas oven.

Furthermore, the gas component further comprises a main pipe and a corrugated pipe, wherein the main pipe is connected with the steak oven burner through the corrugated pipe and is also connected with the gas oven burner.

Furthermore, the gas component further comprises a thermocouple used for flame-out protection of the steak oven and located below the steak oven burner. Furthermore, the steak oven comprises a shell having a side provided with an access window, the steak oven burner is located in the shell, and the end, close to the access window, of the steak oven burner inclines upwards by 5°-20°. Furthermore, a grill is detachably arranged in the shell, and a tray is arranged on the grill and is located below the steak oven burner.

Furthermore, the grill comprises two opposite hanging plates provided with a plurality of sliding grooves matched with the tray, first hangers are respectively arranged on two opposite inner walls of the shell, and second hangers matched with the first hangers are arranged on the hanging plates.

Furthermore, the first hangers are stepped screws, and the second hangers are gourd-shaped hanging holes.

Furthermore, the steak oven burner comprises a jet pipe and an air inlet, wherein the jet pipe comprises a flared first pipe body having a big open end communicated with an external space, and the air inlet is arranged towards the big open end of the first pipe body and has an area smaller than that of the end face of the big open end of the first pipe body.

Furthermore, the steak oven burner further comprises a bracket, and the air inlet is fixed to the first pipe body through the bracket.

Furthermore, the central axis of the air inlet is aligned to the central axis of the first pipe body.

Furthermore, the jet pipe further comprises a flared second pipe body, and a small open end of the first pipe body is in seal connection with a small open end of the second pipe body.

Furthermore, the first pipe body is detachably connected with the second pipe body.

Furthermore, a spoiler is arranged at the end, away from the big open end of the first pipe body, of the jet pipe.

Furthermore, the steak oven burner further comprises a burner shell having a side formed with an opening, the first pipe body is fixed to the burner shell, the big open end of the first pipe body is located outside the burner shell, and a ceramic heating plate is arranged at the opening of the burner shell.

The invention has the following beneficial effects: the gas oven with a steak oven is provided with both a steak oven and a gas oven, so that purchasing costs are reduced for users, and the users can use the steak oven and gas oven at the same time extremely conveniently without walking back and forth; and the gas oven with a steak oven fills a market gap and has a broad market prospect.

### Brief Description of the Several Views of the Drawings

FIG. 1 is an exploded view of a gas oven with a steak oven in one embodiment of the invention;
FIG. 2 is a structural diagram of a gas component in the gas oven with a steak oven in the embodiment of the invention;
FIG. 3 is a structural diagram of a steak oven in the gas oven with a steak oven in the embodiment of the invention;
FIG. 4 is a sectional view of the steak oven in the gas oven with a steak oven in the embodiment of the invention;
FIG. 5 is a partial schematic diagram of the internal structure of the steak oven in the gas oven with a steak oven in a second embodiment of the invention; and
FIG. 6 is an exploded view of a steak oven burner in the gas oven with a steak oven in the second embodiment of the invention.

### Reference Signs:

1, stove frame; 2, gas oven; 3, steak oven; 4, gas component; 5, steak oven burner; 6, gas oven burner; 7, main pipe; 8, corrugated pipe; 9, thermocouple; 10, shell; 11, wire mesh; 12, tray; 13, hanging plate; 14, first hanger; 15, second hanger; 16, access window; 17, first pipe body; 18, second pipe body; 19, air inlet; 20, spoiler; 21, burner shell; 22, ceramic heating plate; 23, bracket.

### Detailed Description of the Invention

The technical contents, objectives and effects of the invention are described in detail below in combination with the embodiments and accompanying drawings.

The key concept of the invention lies in that the gas oven with a steak oven is provided with both a steak oven and a gas oven and thus can be conveniently used by users.

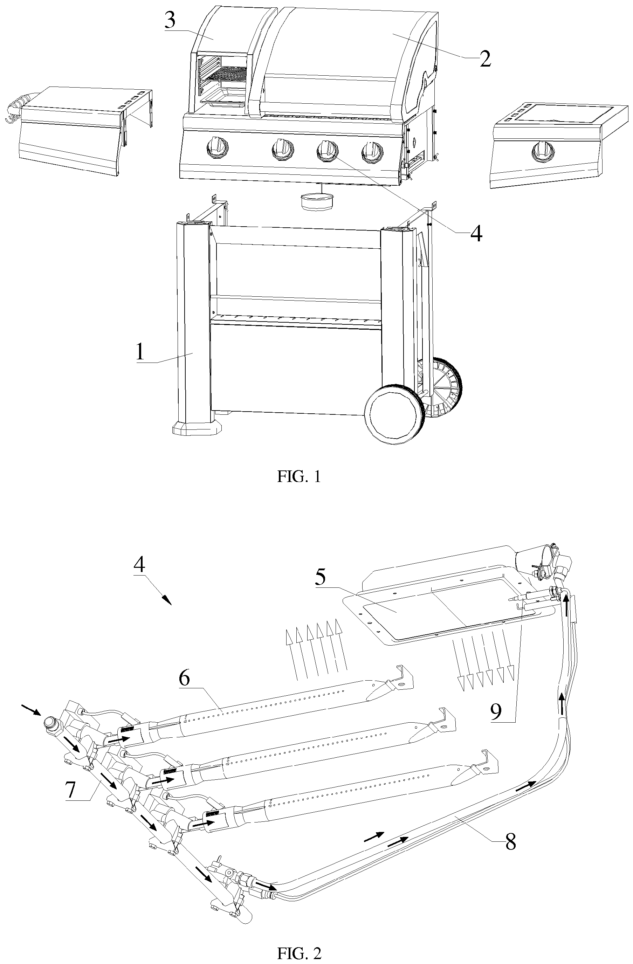

Referring to FIG. 1 to FIG. 6, the gas oven with a steak oven comprises a stove frame 1, wherein a gas oven 2 and a steak oven 3 are arranged on the stove frame 1, and the steak oven 3 is located on one side of the gas oven 2.

From the above description, the invention has the following beneficial effects: the gas oven with a steak oven is provided with both the steak oven 3 and the gas oven 2, so that purchasing costs are reduced for users, and the users can use the steak oven 3 and the gas oven 2 at the same time extremely conveniently without walking back and forth; and the gas oven with a steak oven fills in a market gap and has a broad market prospect.

Furthermore, a gas component 4 is arranged on the stove frame 1 and comprises a steak oven burner 5 located in the steak oven 3 and a gas oven burner 6 located in the gas oven 2.

From the above description, the steak oven burner 5 is used for roasting without an open flame and can be a ceramic plate infrared burner, and the gas oven burner 6 is used for roasting and soup cooking with an open flame. Furthermore, the gas component 4 further comprises a main pipe 7 and a corrugated pipe 8, wherein the main pipe 7 is connected with the steak oven burner 5 through the corrugated pipe 8 and is also connected with the gas oven burner 6.

From the above description, the gas component 4 is of an integrated structure including the steak oven burner 5 and the gas oven burner 6, so that pipe arrangement of the gas component 4 is simplified, and the manufacturing cost of the gas oven with a steak oven is reduced.

Furthermore, the gas component 4 further comprises a thermocouple 9 used for flame-out protection of the steak oven 3 and located below the steak oven burner 5.

From the above description, through the configuration of the thermocouple 9, users can use the gas oven with a steak oven more safely.

Furthermore, the steak oven 3 comprises a shell 10 having a side provided with an access window 16, the steak oven burner 5 is located in the shell 10, and the end, close to the access window 16, of the steak oven burner 5 inclines upwards by 5°-20°.

From the above description, burnt waste gas can be naturally exhausted forwards out of the inclined steak oven burner 5 to create a negative-pressure environment for a combustion chamber, and thus, a better burning effect of the steak oven 3 is fulfilled.

Furthermore, a grill is detachably arranged in the shell 10, and a tray 12 is arranged on the grill and is located below the steak oven burner 5.

From the above description, the grill is detachably arranged in the shell 10, so that users can clean the gas stove conveniently. The tray 12 is used as an oil tray as well as an oven tray.

Furthermore, the grill comprises two opposite hanging plates 13 which are provided with a plurality of sliding grooves matched with the tray 12, first hangers 14 are respectively arranged on two opposite inner walls of the shell 10, and second hangers 15 matched with the first hangers 14 are arranged on the hanging plates 13.

Furthermore, the first hangers 14 are stepped screws, and the second hangers 15 are gourd-shaped hanging holes.

From the above description, the hanging plates 13 are extremely easy and convenient to assemble and disassemble and can be easily cleaned by users, thus improving user experience.

Furthermore, the steak oven burner 5 comprises a jet pipe and an air inlet 19, wherein the jet pipe comprises a flared first pipe body 17 having a big open end communicated with an external space, and the air inlet 19 is arranged towards the big open end of the first pipe body 17 and has an area smaller than that of the end face of the big open end of the first pipe body 17.

From the above description, in the steak oven burner 5, the air inlet 19 is arranged towards the big open end of the first pipe body 17 and the area of the air inlet 19 is smaller than that of the end face of the big open end of the first pipe body 17, so that a Venturi effect is generated when air enters the jet pipe, more air will enter the steak oven burner 5 with the increase of the gas pressure in the air inlet 19, and less air will enter the steak oven burner 5 with the decrease of the gas pressure in the air inlet 19, thus, the steak oven burner 5 is able to adapt to air sources under different pressures, and the universality of the steak oven burner 5 is improved; and manufacturers can export steak ovens 3 having steak oven burners 5 of the same model to various countries, and manufacturing is facilitated for the manufacturers.

Furthermore, the steak oven burner further comprises a bracket 23, and the air inlet 19 is fixed to the first pipe body 17 through the bracket 23.

Furthermore, the central axis of the air inlet 19 is aligned to the central axis of the first pipe body 17.

From the above description, the big open end, corresponding to the air inlet 19, of the first pipe body 17 has an annular negative-pressure area, so that external air can be uniformly sucked into the jet pipe; and the air inlet 19 corresponds to the central area of the big open end of the first pipe body 17, so that gas leakage is prevented, and the safety in use is guaranteed.

Furthermore, the jet pipe further comprises a flared second pipe body 18, and a small open end of the first pipe body 17 is in seal connection with a small open end of the second pipe body 18.

From the above description, gas which is fully mixed with air can be uniformly diffused through the flared second pipe body 18.

Furthermore, the first pipe body 17 is detachably connected with the second pipe body 18.

From the above description, the first pipe body and the second pipe body are detachably connected and can be separately manufactured, thus lowering the machining difficulty of the jet pipe, reducing the manufacturing cost of the steak oven burner 5, and facilitating subsequent maintenance.

Furthermore, a spoiler 20 is arranged at the end, away from the big open end of the first pipe body 17, of the jet pipe.

From the above description, through the configuration of the spoiler 20, the steak oven burner 5 can be filled with gas that is fully mixed with air.

Furthermore, the steak oven burner further comprises a burner shell 21 having a side formed with an opening, the first pipe body 17 is fixed to the burner shell 21, the big open end of the first pipe body 17 is located outside the burner shell 21, and a ceramic heating plate 22 is arranged at the opening of the burner shell 21.

From the above description, the steak oven burner 5 is an infrared burner, so that the heating efficiency is high.

### First Embodiment

Referring to FIG. 1 to FIG. 4, in the first embodiment of the invention, the gas oven with a steak oven comprises a stove frame 1, wherein a gas oven 2 and a steak oven 3 are arranged on the stove frame 1, and the steak oven 3 is located on one side of the gas oven 2. The stove frame 1 comprises a left stand and a right stand, and the gas oven 2 and the steak oven 3 are located between the left stand and the right stand.

Referring to FIG. 1 and FIG. 2, a gas component 4 is arranged on the stove frame 1 and comprises a steak oven burner 5 located in the steak oven 3 and a gas oven burner 6 located in the gas oven 2. The gas component 4 is of a separated structure or an integrated structure. In this embodiment, the gas component 4 is of an integrated structure. Particularly, the gas component 4 further comprises a main pipe 7 connected with the steak oven burner 5 and the gas oven burner 6. Appreciably, the gas component 4 further comprises a plurality of control valves used for controlling air inflow, such as a main air inlet valve, a gas oven valve and a steak oven 3 valve. Operation keys of the control valves are arranged on a panel of the stove frame 1 and include, but are not limited to, electronic control panels, buttons, rotary knobs, and the like.

As shown in FIG. 2, in order to improve the burning effect of the steak oven 3, the gas component 4 further comprises a corrugated pipe 8, and the main pipe 7 is connected with the steak oven burner 5 through the corrugated pipe 8.

In order to improve the safety of the gas stove in use, the gas component 4 further comprises a thermocouple 9 used for flame-out protection of the steak oven 3 and located below the steak oven burner 5. During burning of the steak oven burner 5, heat is radiated onto the thermocouple 9, which in turn, generates a current to keep the control valves working continuously. When the steak oven burner 5 flames out, the thermocouple 9 cannot sense heat anymore and stops generating the current, and the control valves are turned off, so that the situation that gas still continuously flows out of the steak oven burner 5 when the steak oven burner 5 flames out is prevented.

As shown in FIG. 1, FIG. 3 and FIG. 4, the steak oven 3 comprises a shell 10 having a side provided with an access window 16, the steak oven burner 5 is located in the shell 10, and the end, close to the access window 16, of the steak oven burner 5 inclines upwards by 5°-20° to allow waste gas to be exhausted naturally, so that users can eat healthier food, oil accumulation is reduced, and the users can clean the steak oven 3 later more conveniently. Preferably, the shell 10 is of a double-layer hollow structure.

A grill is detachably arranged in the shell 10. Optionally, a wire mesh 11 is arranged on the grill and is located below the steak oven burner 5. Optionally, a tray 12 is arranged on the grill and is located below the steak oven burner 5. Particularly, the grill comprises two opposite hanging plates 13 provided with a plurality of sliding grooves matched with the tray 12 and/or the wire mesh 11, first hangers 14 are respectively arranged on two opposite inner walls of the shell 10, and second hangers 15 matched with the first hangers 14 are arranged on the hanging plates 13. In this embodiment, the first hangers 14 are stepped screws, and the second hangers 15 are gourd-shaped hanging holes.

The gas oven with a steak oven in this embodiment is provided with both the steak oven 3 and the gas oven 2, is low in purchasing cost, convenient to use, good in safety and convenient to clean, can meet gas standards in all countries, and fills in a market gap, and has a broad market prospect.

### Second Embodiment

Referring to FIG. 1 to FIG. 6, in the second embodiment of the invention, the gas oven with a steak oven comprises a stove frame 1, wherein a gas oven 2 and a steak oven 3 are arranged on the stove frame 1, and the steak oven 3 is located on one side of the gas oven 2. The stove frame 1 comprises a left stand and a right stand, and the gas oven 2 and the steak oven 3 are located between the left stand and the right stand.

Referring to FIG. 1 and FIG. 2, a gas component 4 is arranged on the stove frame 1 and comprises a steak oven burner 5 located in the steak oven 3 and a gas oven burner located in the gas oven 2. The gas component 4 is of a separated structure or an integrated structure. In this embodiment, the gas component 4 is of a separated structure. Particularly, the gas component 4 comprises two independent gas systems, wherein one gas system includes the gas oven burner 6 located in the gas oven 2, and the other gas system includes the steak oven burner 5 located in the steak oven 3. The gas component 4 further comprises a main pipe 7 connected with the steak oven burner 5 and the gas oven burner 6. Appreciably, the gas component 4 further comprises a plurality of control valves used for controlling air inflow, such as a main air inlet valve, a gas oven valve and a steak oven 3 valve. Operation keys of the control valves are arranged on a panel of the stove frame 1 and include, but are not limited to, electronic control panels, buttons, and rotary knobs.

Referring to FIG. 1, FIG. 3 and FIG. 5, the steak oven 3 comprises a shell 10 having a side provided with an access window 16, the steak oven burner 5 is located in the shell 10, and the end, close to the access window 16, of the steak oven burner 5 inclines upwards by 5°-20° to allow waste gas to be exhausted naturally, so that users can eat healthier food, oil accumulation is reduced, and the users can clean the steak oven 3 later conveniently. Preferably, the shell 10 is of a double-layer hollow structure.

Optionally, a plurality of steak oven burners 5 are arranged in the shell 10 and are arrayed in one row. The inclination angles of different steak oven burners 5 in the steak oven 3 with respect to the access window 16 are identical or different.

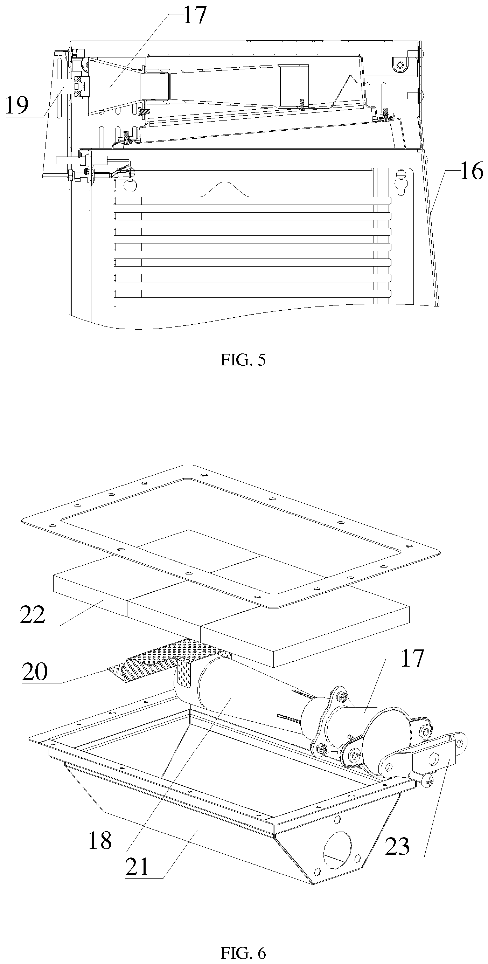

Referring to FIG. 5 and FIG. 6, in order to improve the burning effect of the steak oven 3, the steak oven burner 5 comprises a jet pipe and an air inlet 19, wherein the jet pipe comprises a flared first pipe body 17 having a big open end communicated with an external space, and the air inlet 19 is arranged towards the big open end of the first pipe body 17 and has an area smaller than that of the end face of the big open end of the first pipe body 17. Preferably, the central axis of the air inlet 19 is aligned to the central axis of the first pipe body 17.

The jet pipe further comprises a flared second pipe body 18, and a small open end of the first pipe body 17 is in seal connection with a small open end of the second pipe body 18. The first pipe body 17 and the second pipe body 18 are detachably connected to be conveniently machined by manufacturers.

A spoiler 20 is arranged at the end, away from the big open end of the first pipe body 17, of the jet pipe. In this embodiment, the spoiler 20 is arranged at the end, away from the first pipe body 17, of the second pipe body 18 and is approximately in a Z shape.

As shown in FIG. 6, the steak oven burner 5 further comprises a burner shell 21 having a side formed with an opening, the first pipe body 17 is fixed to the burner shell 21, the big open end of the first pipe body 17 is located outside the burner shell 21, a ceramic heating plate 22 is arranged at the opening of the burner shell 21, and a plurality of flame holes are formed in the ceramic heating plate 22. In this embodiment, the section of the burner shell 21 is in the shape of an isosceles trapezoid, so that mixed gas can penetrate into the internal space of the burner shell 21 more easily.

Optionally, the steak oven burner 5 further comprises a bracket 23, the air inlet 19 is fixed to the first pipe body 17, the burner shell 21, or the shell 10 through the bracket 23. That is, the steak oven burner 5 in this embodiment can be directly regarded as an infrared burner.

Referring to FIG. 2, in order to improve the safety of the gas stove in use, the gas component 4 further comprises a thermocouple 9 used for flame-out protection of the steak oven 3 and located below the steak oven burner 5. During burning of the steak oven burner 5, heat is radiated onto the thermocouple 9, which in turn, generates a current to keep the control valves working continuously. When the steak oven burner 5 flames out, the thermocouple 9 cannot sense heat anymore and stops generating the current, the control valves are turned off, and thus, the situation that gas continuously flows out of the steak oven burner 5 when the steak oven burner 5 flames out is prevented.

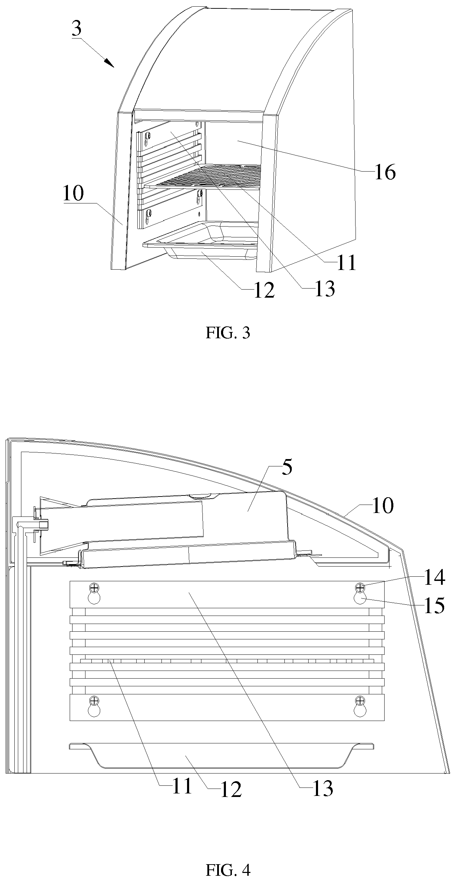

A grill is detachably arranged in the shell 10. Optionally, a wire mesh is arranged on the grill and is located below the steak oven burner 5. Optionally, a tray 12 is arranged on the grill and is located below the steak oven burner 5. Referring to FIG. 3 and FIG. 4, particularly, the grill comprises two opposite hanging plates 13 provided with a plurality of sliding grooves matched with the tray 12 and/or the wire mesh 11, first hangers 14 are respectively arranged on two opposite inner walls of the shell 10, and second hangers 15 matched with the first hangers 14 are arranged on the hanging plates 13. In this embodiment, the first hangers 14 are stepped screws, and the second hangers 15 are gourd-shaped hanging holes.

According to the steak oven in this embodiment, a Venturi effect is generated when air enters the jet pipe, more air will enter the steak oven burner 5 with the increase of the gas pressure in the air inlet, and less air will enter the steak oven burner 5 with the decrease of the gas pressure in the air inlet, so that the steak oven burner 5 is able to adapt to air sources under different pressures, and the universality of the steak oven burner 5 is improved. Particularly, the air pre-mixing capacity of the steak oven burner 6 can be improved under the Venturi effect, and the steak oven burner is matched with a valve nozzle to obtain sufficient combustion-supporting air under the gas pressure of 28-50mbar, so that a good burning effect is fulfilled, the gas standards in all countries are met, and no open flame is generated; the safety of the steak oven burner 5 in use is good; and the first pipe body and the second pipe body are detachably connected, so that the manufacturing cost of the steak oven burner 5 is reduced; and the steak oven burner 5 is obliquely arranged in the steak oven, so that waste gas can be easily exhausted.

In conclusion, the gas oven with a steak oven is provided with both a steak oven and a gas oven, so that purchasing costs are reduced for users, and the users can use the steak oven and the gas oven at the same time extremely conveniently without walking back and forth; the gas oven with a steak oven fills in a market gap and has a broad market prospect; and the steak oven burner is able to adapt to air sources under different pressures, so that the universality of the burner is improved; and manufacturers can export burners of the same model to various countries, and manufacturing is facilitated for the manufacturers.

The aforesaid embodiments are only illustrative ones of the invention, and are not intended to the limit the patent scope of the invention. All equivalent transformations made on the basis of the contents in the specification and the accompanying drawings, or direct or indirect applications to related technical fields should also fall within the patent protection scope of the invention.

## Claims

1. A gas oven with a steak oven, comprising a stove frame, wherein a gas oven and a steak oven are arranged on the stove frame, and the steak oven is located on one side of the gas oven.

2. The gas oven with a steak oven according to Claim 1, wherein a gas component is arranged on the stove frame and comprises a steak oven burner located in the steak oven and a gas oven burner located in the gas oven.

3. The gas oven with a steak oven according to Claim 2, wherein the gas component further comprises a main pipe and a corrugated pipe, and the main pipe is connected with the steak oven burner through the corrugated pipe and is also connected with the gas oven burner.

4. The gas oven with a steak oven according to Claim 2, wherein the gas component further comprises a thermocouple used for flame-out protection of the steak oven and located below the steak oven burner.

5. The gas oven with a steak oven according to Claim 2, wherein the steak oven comprises a shell having a side provided with an access window, the steak oven burner is located in the shell, and an end, close to the access window, of the steak oven burner inclines upwards by 5°-20°.

6. The gas oven with a steak oven according to Claim 5, wherein a grill is detachably arranged in the shell, and a tray is arranged on the grill and is located below the steak oven burner.

7. The gas oven with a steak oven according to Claim 6, wherein the grill comprises two opposite hanging plates provided with a plurality of sliding grooves matched with the tray, first hangers are respectively arranged on two opposite inner walls of the shell, and second hangers matched with the first hangers are arranged on the hanging plates.

8. The gas oven with a steak oven according to Claim 7, wherein the first hangers are stepped screws, and the second hangers are gourd-shaped hanging holes.

9. The gas oven with a steak oven according to Claim 2, wherein the steak oven burner comprises a jet pipe and an air inlet, the jet pipe comprises a flared first pipe body having a big open end communicated with an external space, and the air inlet is arranged towards the big open end of the first pipe body and has an area smaller than that of an end face of the big open end of the first pipe body.

10. The gas oven with a steak oven according to Claim 9, wherein the steak oven burner further comprises a bracket, and the air inlet is fixed to the first pipe body through the bracket.

11. The gas oven with a steak oven according to Claim 9, wherein a central axis of the air inlet is aligned to a central axis of the first pipe body.

12. The gas oven with a steak oven according to Claim 9, wherein the jet pipe further comprises a flared second pipe body, and a small open end of the first pipe body is in seal connection with a small open end of the second pipe body.

13. The gas oven with a steak oven according to Claim 12, wherein the first pipe body is detachably connected with the second pipe body.

14. The gas oven with a steak oven according to Claim 9, wherein a spoiler is arranged at an end, away from the big open end of the first pipe body, of the jet pipe.

15. The gas oven with a steak oven according to Claim 9, wherein the steak oven burner further comprises a burner shell having a side formed with an opening, the first pipe body is fixed to the burner shell, the big open end of the first pipe body is located outside the burner shell, and a ceramic heating plate is arranged at the opening of the burner shell.
